# EUROPEAN PATENT APPLICATION

(11) **EP 2 860 208 A1**
(43) Date of publication of application: **15.04.2015**
(21) Application number: 14188162.3
(22) Date of filing: 08.10.2014
(51) Int. Cl.: C08G 18/48, C08G 18/72, C08G 18/76, C08G 18/79, C08G 18/10

(54) **Urethane foam rubber and composition for forming urethane foam rubber**

(30) Priority: 10.10.2013 JP 2013212754
(71) Applicant: YAMAHA CORPORATION, Hamamatsu-shi Shizuoka 430-8650 (JP)
(72) Inventor: Miyata, Tomoya, Hamamatsu-shi, Shizuoka 430-8650 (JP); Suzuki, Katsunori, Hamamatsu-shi, Shizuoka 430-8650 (JP); Nose, Takayuki, Hamamatsu-shi, Shizuoka 430-8650 (JP); Mori, Takato, Hamamatsu-shi, Shizuoka (JP)
(74) Representative: Klang, Alexander H.

(57) **Abstract**

According to the present invention, a urethane foam rubber is constituted with a polymer having a moiety derived from a diisocyanate, and a moiety derived from a polyether polyol, number of atoms composing the shortest path along a bond intervening two NCO groups in at least a part of the diisocyanate is no less than 11, Mw of the polyether polyol is no less than 1,000 and no greater than 4,000, and the polymer exhibits at least one of the following features (i) to (iii): (i) having moieties derived from two or more types of the polyether polyols that are each different in terms of at least one of a weight average molecular weight and an oxyalkylene unit; (ii) having the moiety derived from the polyether polyol that includes two or more types of oxyalkylene units; and (iii) further having a moiety derived from a tri- or higher multi-functional isocyanate.

## Description

### FIELD OF THE INVENTION

The present invention relates to a urethane foam rubber, and a composition for forming a urethane foam rubber.

### DISCUSSION OF THE BACKGROUND

Urethane-based materials having high impact resilience have been extensively used in a variety of fields. Such urethane-based materials having high impact resilience have been desired to have a further increased coefficient of impact resilience thereof, as well as an increased flexibility thereof to reduce the hardness, in light of safety and feel upon touch etc. However, it is difficult to concurrently attain all these features. More specifically, it is reported that in the case of solid rubbers, decreasing the hardness is difficult although the coefficient of impact resilience can be increased (see Japanese Unexamined Patent Application, Publication No. H8-231669). To the contrary, in the case of urethane foam rubbers, increasing the coefficient of impact resilience is difficult although the hardness can be decreased (see Japanese Unexamined Patent Application, Publication No. 2003-335830).

Among the urethane-based materials having high impact resilience, urethane foam rubbers have been investigated since they are preferred in light of an advantage of being capable of having a lower density. However, a lower hardness and a smaller loss tangent (hereinafter, may be referred to as "tan δ") have been demanded for such materials having high impact resilience. Still more, a possibility of stably attaining these physical properties at temperatures within a temperature range of from as low as about -20°C to about 50°C has been also desired. However, such conventional urethane foam rubbers described above fail to satisfy these requirements.

### [PRIOR ART DOCUMENTS]

### [PATENT DOCUMENTS]

Patent Document 1: Japanese Unexamined Patent Application, Publication No. H8-231669
Patent Document 2: Japanese Unexamined Patent Application, Publication No. 2003-335830

### SUMMARY OF THE INVENTION

The present invention was made in view of the foregoing circumstances, and it is an object of the present invention to provide a urethane foam rubber having a great coefficient of impact resilience as well as a low hardness and a small tan δ, and being capable of attaining these characteristics even in a low temperature range.

According to an aspect of the invention made for solving the aforementioned problems, a urethane foam rubber is provided, including a polymer (hereinafter, may be also referred to as "polymer (P)") having a moiety derived from a diisocyanate (hereinafter, may be also referred to as "diisocyanate (A)"), and a moiety derived from a polyether polyol (hereinafter, may be also referred to as "polyether polyol (C)"),
the number of atoms included in a shortest path along a bond intervening two NCO groups in at least a part of the diisocyanate (hereinafter, may be also referred to as "atom number in a minimum bond path") being no less than 11,
the weight average molecular weight (hereinafter, may be also referred to as "Mw") of the polyether polyol being no less than 1,000 and no greater than 4,000, and
the polymer exhibiting at least one of the following features (i) to (iii):
(i) having moieties derived from two or more types of the polyether polyols that are each different in terms of at least one of a weight average molecular weight and an oxyalkylene unit;
(ii) having the moiety derived from the polyether polyol that includes two or more types of oxyalkylene units; and
(iii) further having a moiety derived from a tri-or higher multi-functional isocyanate (hereinafter, may be also referred to as "isocyanate (B)").

Due to having the above specific structure, the urethane foam rubber according to the aspect of the present invention has a great coefficient of impact resilience as well as a low hardness and a small tan δ, and is capable of attaining these characteristics even in a low temperature range.

According the aspect of the present invention, it is necessary that the polymer exhibits at least one of the above features (i) to (iii).

When the the polymer exhibits at least one of the features (i) to (iii), it would be possible to carry out foaming and a curing reaction in a well-balanced manner. Furthermore, through combining this characteristic with use of the above specific diisocyanate and polyether polyol, the great coefficient of impact resilience, and stable attainment of the great coefficient of impact resilience, the low hardness and the small tan δ even in a low temperature range can be both achieved.

When the polymer exhibits the feature (i), the two or more types of polyether polyols (C) are preferably at least two selected from the group consisting of polyoxypolytetramethylene glycol, polyoxypolypropylene glycol and polyoxypolyethylene glycol-polyoxypolypropylene glycol.

By using a plurality of types of the polyether polyols in the above specific combination in the urethane foam rubber, the balance between the foaming and the curing reaction can be further improved. In addition, since the above specific polyether polyol can be used as a medium for mixing a foaming agent and the like, the foaming and curing can be more uniformly carried out. As a result, the great coefficient of impact resilience and the characteristics in a low temperature range can be both attained at a higher level.

The molecular weight distribution curve as determined by gel permeation chromatography of the polyether polyol preferably includes two or more peaks.

Provided that the polyether polyol shows such a molecular weight distribution characteristic, and that each molecular weight distribution falls within a comparatively narrow range, the characteristics in a low temperature range of the urethane foam rubber can be further improved.

The urethane foam rubber preferably has a coefficient of impact resilience at 23°C of no less than 0.76.

The urethane foam rubber preferably has an Asker C hardness at 23°C of no greater than 70.

Due to thus having such superior characteristics, the urethane foam rubber can be suitably used for beddings, devices for sports, shoes, musical instruments, computer input devices, and the like.

Another aspect of the present invention made for solving the aforementioned problems is directed to a composition for forming a urethane foam rubber containing
a material including a diisocyanate and a polyether polyol, or a prepolymer constituted with the material,
number of atoms included in a shortest path along a bond intervening two NCO groups in at least a part of the diisocyanate being no less than 11,
a weight average molecular weight of the polyether polyol being no less than 1,000 and no greater than 4,000, and
the polymer exhibiting at least one of following features (i) to (iii) :
(i) having moieties derived from two or more types of the polyether polyols that are each different in terms of at least one of a weight average molecular weight and an oxyalkylene unit;
(ii) having the moiety derived from the polyether polyol that includes two or more types of oxyalkylene units; and
(iii) further having a moiety derived from a tri-or higher multi-functional isocyanate.

According to the composition for forming a urethane foam rubber of the another aspect of the present invention, a urethane foam rubber can be formed which has a great coefficient of impact resilience as well as a low hardness and a small tan δ, and attains these characteristics even in a low temperature range as described above.

It is preferred that the composition for forming a urethane foam rubber further contains a foam stabilizer.

When the composition for forming a urethane foam rubber further contains a foam stabilizer, the foaming and the curing reaction can be carried out in a more well-balanced manner, and as a result, the great coefficient of impact resilience and the aforementioned characteristics in a low temperature range can be both attained at higher levels.

### EFFECTS OF THE INVENTION

The urethane foam rubber has a great coefficient of impact resilience as well as a low hardness and a small tan δ, and is capable of attaining these characteristics even in a low temperature range. The composition for forming a urethane foam rubber enables the urethane foam rubber having the characteristics to be formed. Therefore, the urethane rubber can be suitably used for beddings, devices for sports, shoes, musical instruments, computer input devices, and the like.

### DESCRIPTION OF THE PREFERRED EMBODIMENTS

### Urethane Foam Rubber

The urethane foam rubber is constituted with (P) a polymer having a moiety derived from (A) a diisocyanate, and a moiety derived from (C) a polyether polyol. The urethane foam rubber is typically obtained by, for example, foaming and curing a composition prepared by adding a foaming agent to a material for forming the polymer (P).

### Polymer (P)

The polymer (P) has the moiety derived from the diisocyanate (A) and the moiety derived from the polyether polyol (C), in which: the atom number in a minimum bond path in at least a part of the diisocyanate (A) is no less than 11; the polyether polyol (C) has an Mw of no less than 1,000 and no greater than 4,000; and at least one of the following requirements (i) to (iii) is/are satisfied:
(i) the polyether polyol (C) includes two or more types thereof that are each different in terms of at least one of the Mw and an oxyalkylene unit;
(ii) the polyether polyol (C) includes two or more types of oxyalkylene units; and
(iii) the polymer (P) further has a moiety derived from (B) an isocyanate.
In other words, the polymer exhibits at least one of following features (i) to (iii):
(i) having moieties derived from two or more types of the polyether polyols that are each different in terms of at least one of a weight average molecular weight and an oxyalkylene unit;
(ii) having the moiety derived from the polyether polyol that includes two or more types of oxyalkylene units; and
(iii) further having a moiety derived from a tri-or higher multi-functional isocyanate.

The urethane foam rubber has a great coefficient of impact resilience as well as a low hardness and a small tan δ, and is capable of attaining these characteristics even in a low temperature range since the polymer (P) constituting the urethane foam rubber has the above specific structure. Although not necessarily clear, the cause of achieving the effects of the urethane foam rubber due to having the aforementioned constitution can be presumed, for example, as in the following. That is, polymer chains of the polyurethane formed from the diisocyanate (A) having the atom number in a minimum bond path falling within the above specific range, and the polyether polyol (C) having an Mw falling within the above specific range have a short hard segment including a urethane bond moiety, and a long soft segment including an oxyalkylene unit moiety of the polyether diol. Thus, it is considered that the polymer chains of the polyurethane are less likely to be entangled with one another, leading to a smaller hysteresis loss resulting from friction between the polymer chains, whereby a structure having a significant elastic potential can be provided while having low elasticity. In addition, as indicated by the features (i) to (iii), when the isocyanate components or the polyether polyol components of the above specific a plurality of types is used, it is believed that the foaming and the curing reaction described above can be carried out in a well-balanced manner, thereby consequently leading to an achievement of both the great coefficient of impact resilience and the characteristics in a low temperature range.

The urethane foam rubber can be synthesized by, for example, foaming and curing (U) a composition for forming a urethane foam rubber illustrated below.

### Composition for Forming Urethane Foam Rubber (U)

The composition for forming a urethane foam rubber (U) contains a material including the diisocyanate (A) and the polyether polyol (C), or a prepolymer constituted with the material (hereinafter, may be also referred to as "prepolymer (D)"), wherein
atom number in a minimum bond path in at least a part of the diisocyanate (A) is no less than 11,
the Mw of the polyether polyol (C) is no less than 1,000 and no greater than 4,000, and
at least one of the following requirements (i) to (iii) is/are satisfied:
(i) the polyether polyol (C) includes two or more types thereof that are each different in terms of at least one of the Mw and an oxyalkylene unit;
(ii) the polyether polyol (C) includes two or more types of oxyalkylene units; and
(iii) the material further has (B) an isocyanate.
In other words, the polymer exhibits at least one of following features (i) to (iii):
(i) having moieties derived from two or more types of the polyether polyols that are each different in terms of at least one of a weight average molecular weight and an oxyalkylene unit;
(ii) having the moiety derived from the polyether polyol that includes two or more types of oxyalkylene units; and
(iii) further having a moiety derived from a tri-or higher multi-functional isocyanate.

In addition to each component described above, the composition for forming a urethane foam rubber (U) may contain other component(s) such as a crosslinking agent, a curing catalyst, a foaming agent, a foam stabilizer, an antioxidant and an ultraviolet ray-absorbing agent. The composition for forming a urethane foam rubber (U) may contain one, or two or more types of each of the components.

Hereinafter, each component will be explained.

### Diisocyanate (A)

The diisocyanate (A) is a compound having two NCO groups. The diisocyanate (A) may have only the NCO groups as a functional group, or may have other functional group(s) except for the NCO group. Examples of the other functional group include a halogen atom, a hydroxyl group, an amino group, a cyano group, a nitro group, a carbodiimide group (-N=C=N-), an alkoxy group, an alkoxycarbonyl group, an acyl group, and the like.

Examples of the diisocyanate (A) include:
aliphatic diisocyanates such as tetramethylene diisocyanate, hexamethylene diisocyanate, undecane diisocyanate, dodecane diisocyanate and tridecane diisocyanate;
alicyclic diisocyanates such as methylene di(1,4-cyclohexyleneisocyanate), isophorone diisocyanate, cyclohexane-1,4-diisocyanate, tri(1,4-cyclohexylene)diisocyanate, propylene-1,3-di(1,4-cyclohexyleneisocyanate) and norbornene diisocyanate (NBDI);
aromatic diisocyanates such as diphenylmethane diisocyanate (MDI), tolylene diisocyanate (TDI), carbodiimide-modified diphenylmethane diisocyanate (carbodiimide-modified MDI and di(isocyanatophenylmethylphenyl)carbodiimide); and the like.

As the diisocyanate (A), aromatic diisocyanates are preferred, and MDI and carbodiimide-modified MDI are more preferred among these.

The atom number in a minimum bond path of the diisocyanate (A), i.e., "number of atoms included in the shortest path along a bond intervening two NCO groups" as referred to herein means a minimum number of atoms (excluding the nitrogen atom of the NCO groups) included in a path along bonds consisting of a plurality of covalent bonds linking between an N atom of one NCO group and an N atom of other NCO group of the diisocyanate (A). The covalent bond may be any one of a single bond, an ethylenic double bond such as C=C and C=N, and an aromatic double bond. In the composition for forming a urethane foam rubber (U), the atom number in a minimum bond path in at least a part of the diisocyanate (A) is acceptable as long as it is no less than a predetermined value. More specifically, either the entirety or a part of the diisocyanate (A) may have the atom number in a minimum bond path falling within the above range. In the entirety of the diisocyanate (A), the proportion of the diisocyanate having the atom number in a minimum bond path being no less than the predetermined value is preferably no less than 10% by mass, more preferably no less than 20% by mass, still more preferably no less than 25% by mass, and particularly preferably no less than 50% by mass. When the proportion of the diisocyanate having the atom number in a minimum bond path being no less than the predetermined value falls within the above range, the aforementioned coefficient of impact resilience and characteristics in a low temperature range can be further improved.

The lower limit of the atom number in a minimum bond path is 11, preferably 13, more preferably 15, still more preferably 17, particularly preferably 19, and even more particularly preferably 21. The upper limit of the atom number in a minimum bond path is preferably 40, more preferably 32, and still more preferably 26. When the atom number in the minimum bond path falls within the above range, the coefficient of impact resilience of the urethane foam rubber can be further increased. When the atom number in the minimum bond path is less than the lower limit, the coefficient of impact resilience of the urethane foam rubber tends to be decreased. When the atom number in the minimum bond path is greater than the upper limit, the hardness of the urethane foam rubber tends to be increased.

Examples of the diisocyanate (A) having the atom number in a minimum bond path of no less than 11 include:
aliphatic diisocyanates such as undecane diisocyanate (11), dodecane diisocyanate (12) and tridecane diisocyanate (13) ;
alicyclic diisocyanates such as tri(1,4-cyclohexylene)diisocyanate (12) and propylene-1,3-di(1,4-cyclohexylene isocyanate) (11);
aromatic diisocyanates such as carbodiimide-modified MDI (21); and the like.

Of these, aromatic diisocyanates are preferred, and carbodiimide-modified MDI is more preferred.

### Isocyanate (B)

The isocyanate (B) is a tri- or higher multi-functional isocyanate, in other words, an isocyanate having three or more NCO groups. Examples of the isocyanate (B) include triisocyanates having three NCO groups, compounds having four or more NCO groups, a mixture of these, and the like. The isocyanate (B) may have only the NCO group as a functional group, and other functional group except for the NCO group may be also included. Examples of the other functional group include functional groups similar to examples illustrated for the other functional group in the diisocyanate (A), and the like.

Examples of the triisocyanate include:
aliphatic triisocyanates such as 1,3,6-hexamethylene triisocyanate and 1,6,11-undecane triisocyanate;
alicyclic triisocyanates such as cyclohexane-1,3,5-triisocyanate and tricyclohexylmethane triisocyanate;
aromatic triisocyanates such as triphenylmethane triisocyanate and dimethylenetriphenylene triisocyanate (trifunctional crude MDI);
trifunctional isocyanates such as trimers, biurets, allophanates and adducts of a diisocyanate such as hexamethylene diisocyanate and isophorone diisocyanate; and the like.

Examples of the compound having four or more NCO groups include cyclohexane-1,2,4,5-tetraisocyanate, benzene-1,2,4,5-tetraisocyanate, and the like.

Examples of the mixture of the isocyanate having three, or four or more NCO groups include polymethylene polyphenylene polyisocyanate, and the like.

Examples of the commercially available product of the triisocyanate include "Duranate™ TKA-100" manufactured by Asahi Kasei Chemicals Corporation, and the like.

Examples of the commercially available product of the mixture of the isocyanate having three, or four or more NCO groups include "M20S" manufactured by BASF INOAC Polyurethanes Ltd., and the like.

Of these, the isocyanate (B) is preferably a triisocyanate, and the mixture of the isocyanate having three, or four or more NCO groups, more preferably an aromatic triisocyanate, and still more preferably trifunctional crude MDI, and polymethylene polyphenylenepolyisocyanate.

When the isocyanate (B) is used, the proportion of the isocyanate (B) with respect to 100 parts by mass of the diisocyanate (A) is preferably 1 part by mass to 50 parts by mass, more preferably 2 parts by mass to 30 parts by mass, and still more preferably 5 parts by mass to 20 parts by mass.

### Polyether Polyol (C)

The polyether polyol (C) is a compound having an oxyalkylene unit (-R-O-, wherein R represents an alkylene group) as a principal repeating unit, and having two or more hydroxyl groups, with an Mw of the polyether polyol (C) being no less than 1,000 and no greater than 4,000. The polyether polyol (C) is not particularly limited as long as the polyether polyol (C) has the structure described above. The polyether polyol (C) is exemplified by a polyether diol having two hydroxyl groups, a polyether triol having three hydroxyl groups, a polyether polyol having four or more hydroxyl groups, and the like. The oxyalkylene unit included in the polyether polyol (C) may be all the same in an identical molecule, or different oxyalkylene units may be included in the polyether polyol (C). The polyether polyol (C) may have other repeating unit(s) except for the oxyalkylene unit, within a range not leading to impairment of the effects of the present invention.

The lower limit of the Mw of the polyether polyol (C) is 1,000, preferably 1,300, more preferably 1,600, still more preferably 1,700, and particularly preferably 1,800. The upper limit of the Mw is 4,000, preferably 3,200, more preferably 2,500, still more preferably 2,200, and particularly preferably 2,000. In the urethane foam rubber, when the Mw of the polyether polyol (C) falls within the above range, the coefficient of impact resilience can be further increased. When the Mw is less than the lower limit, the hardness of the urethane foam rubber tends to be increased. When the Mw is greater than the upper limit, handling of the material at normal temperatures may be difficult due to an increased liquid viscosity of the composition for forming a urethane foam rubber (U), hardening through crystallization, and the like.

The molecular weight distribution curve of the polyether polyol (C) as determined by gel permeation chromatography (GPC) preferably includes two or more peaks.

Further, the upper limit of the dispersity index (a ratio of the Mw to the number average molecular weight (Mn)) of the polyether polyol (C) is preferably 2.0, more preferably 1.8, and still more preferably 1.6. The lower limit of the dispersity index is preferably 1.0, more preferably 1.1, and still more preferably 1.2.

In the urethane foam rubber, when the polyether polyol (C) exhibits such a molecular weight distribution characteristic, and when the molecular weight distribution falls within a comparatively narrow range, the urethane foam rubber can have further improved characteristics in a low temperature range described above.

Examples of the polyether polyol (C) include:
polyether diols, for example:
   polyoxypolyalkylene glycols such as polyoxypolyethylene glycol (PEG), polyoxypolypropylene glycol (PPG), polyoxypolytetramethylene glycol (PTMG), polyoxypoly(2-methyltetramethylene) glycol (PMeTMG), polyoxypolypentamethylene glycol (PPMG), polyoxypolyhexamethylene glycol (PHMG) and polyoxypolyethylene glycol-polyoxypolypropylene glycol (PEG-PPG);
   ring-opened polymers of a cyclic ether such as ethylene oxide, propylene oxide, trimethylene oxide or tetrahydrofuran produced using as an initiator, a bifunctional hydroxy compound such as bisphenol A and hydrogenerated bisphenol A, or a glycol such as ethylene glycol, 1,2-propanediol, 1,3-propanediol, 1,4-butanediol, 2,2-dimethyl-1,3-propanediol, 3-methyl-1,5-pentanediol, 2,4-diethyl-1,5-pentanediol, 1,6-hexanediol, 1,8-octanediol, 1,10-decanediol, diethylene glycol and dipropylene glycol; and the like,
polyether triols, for example:
   ring-opened polymers of a cyclic ether such as ethylene oxide, propylene oxide, trimethylene oxide or tetrahydrofuran produced using as an initiator, a trifunctional hydroxy compound like a triol such as glycerin, hexanetriol and trimethylolpropane; and the like.

Among these, the polyether polyol (C) is preferably a polyether diol, more preferably a polyoxypolyalkylene glycol, still more preferably a polyoxypolyalkylene glycol in which the oxyalkylene unit has 2 to 6 carbon atoms, particularly preferably PEG, PPG, PTMG, PPMG and PEG-PPG, even more particularly preferably PPG, PTMG and PEG-PPG.

It is preferred that two or more types of the polyether polyols (C) that are each different in terms of at least one of the Mw and the oxyalkylene unit are involved. In the urethane foam rubber, due to such specific a plurality of types of the polyether polyols (C), a great coefficient of impact resilience, and stable attainment of the coefficient of impact resilience, the low hardness and the small tan δ even in a low temperature range can be both achieved.

A combination of two or more types of the polyether polyols (C) having an oxyalkylene unit that is different from each other may be, for example, a combination in which the number of carbon atoms of the alkylene group in the oxyalkylene unit is different from each other, and specific examples of the combination include: PEG with PPG; PEG with PTMG, PEG with PPMG; PEG with PHMG; PPG with PTMG; PPG with PPMG; PPG with PHMG; PTMG with PPMG; PTMG with PHMG; PPMG with PHMG; and the like.

Among these, a combination in which the number of carbon atoms of the alkylene group is different from each other by only one is preferred, each combination of PEG with PPG, PPG with PTMG, PTMG with PPMG, or PPMG with PHMG is more preferred, and a combination of PPG with PTMG is still more preferred.

In addition, the polyether polyol (C) preferably has two or more types of oxyalkylene units in an identical molecule. Exemplary combination of the two or more types of oxyalkylene units includes at least two selected from the group consisting of a polyoxypolyethylene unit, a polyoxypolypropylene unit, a polyoxypolytetramethylene unit, a polyoxypoly(2-methyltetramethylene) unit, a polyoxypolypentamethylene unit and a polyoxypolyhexamethylene unit.

Of these, combinations in which the number of carbon atoms of the alkylene group is different from each other by only one is preferred, and examples of more preferred combinations include: a polyoxypolyethylene unit with a polyoxypolypropylene unit; a polyoxypolypropylene unit with a polyoxypolytetramethylene unit; a polyoxypolytetramethylene unit with a polyoxypoly(2-methyltetramethylene) unit; a polyoxypolytetramethylene unit with a polyoxypolypentamethylene unit; a polyoxypoly(2-methyltetramethylene) unit with a polyoxypolyhexamethylene unit; a polyoxypolypentamethylene unit with a polyoxypolyhexamethylene unit. Examples of yet more preferred combinations include: a polyoxypolytetramethylene unit with a polyoxypoly(2-methyltetramethylene) unit.

When two types of the polyether polyols (C) are involved, with respect to 100 parts by mass of one polyether polyol, the proportion of other polyether polyol is preferably 1 part by mass to 60 parts by mass, more preferably 3 parts by mass to 50 parts by mass, still more preferably 5 parts by mass to 45 parts by mass, and particularly preferably 10 parts by mass to 40 parts by mass. When the two types of the polyether polyol (C) are involved at the proportion described above, the urethane foam rubber can achieve further well balance of the foaming and the curing reaction, and as a result, the coefficient of impact resilience and the characteristics in a low temperature range can be both improved.

The composition for forming a urethane foam rubber (U) may contain as a polyol component, other polyol excluding the polyether polyol (C), in a small amount falling within a range not leading to impairment of the effects of the present invention. The other polyol is exemplified by polyether polyols having a different Mw from that of the polyether polyol (C) and polyols other than the polyether polyol, and the like. Examples of the polyol other than the polyether polyol include polyester polyols, polyolefin polyols, polycarbonate polyols, and the like.

In regard to the proportion of the isocyanate components (diisocyanate (A) and isocyanate (B)), the lower limit of an NCO Index, i.e., the a ratio of the total number of moles of the NCO groups included in the isocyanate components to the total number of moles of hydroxyl groups included in the polyol components (polyether polyol (C) and the other polyol) is preferably 0.8, more preferably 0.9, and still more preferably 1.0. The upper limit of the NCO Index is preferably 1.5, more preferably 1.2, and still more preferably 1.1. The proportion of the polyol components falling within the above range enables the hardness of the urethane foam rubber to be more appropriately adjusted.

### Prepolymer (D)

The prepolymer (D) is constituted with a material containing the diisocyanate (A) and the polyether polyol (C), and is typically a compound having an NCO group at its ends obtained by allowing the isocyanate components to react with the polyol components in an amount less than its theoretical quantity, using a well-known technique.

The prepolymer (D) is not particularly limited as long as it is constituted with the material containing the diisocyanate (A) and the polyether polyol (C). The diisocyanate (A) and the polyisocyanate (C) for use in a reaction of obtaining the prepolymer (D) may be, for example, compounds similar to those described above, and the like. In addition, the aforementioned isocyanate (B) may be concurrently used in this reaction, and the other polyol described above may be further used.

### Other components

In addition to the isocyanate components and the polyol components, or the prepolymer (D), the composition for forming a urethane foam rubber (U) may contain other components such as a crosslinking agent, a curing accelerator catalyst, a foaming agent, a foam stabilizer, an antioxidant and an ultraviolet ray-absorbing agent. The composition for forming a urethane foam rubber (U) may contain one, or two or more types of the other components, and one, or two or more types of each component may be contained.

### Crosslinking Agent

The crosslinking agent is exemplified by, e.g., low molecular weight diols, low molecular weight triols, low molecular weight tetra- or higher multi-valent alcohols, polyamines, amino alcohols, and the like. The crosslinking agent has a molecular weight of preferably no greater than 400.

Examples of the low molecular weight diol include
divalent alcohols such as ethylene glycol, 1,2-propylene glycol, 1,3-propanediol, 1,3-butanediol, 1,4-butanediol, 1,5-pentanediol, 1,6-hexanediol, 1,8-octanediol, neopentyl glycol, 2-methyl-1,3-propanediol, 3-methyl-1,5-pentanediol, 2-methyl-2,4-pentanediol, 2-ethyl-1,3-hexanediol, 1,2-dihydroxycyclohexane, 1,3-dihydroxycyclohexane, 1,4-dihydroxycyclohexane, 1,2-dihydroxymethylcyclohexane, 1,3-dihydroxymethylcyclohexane, 1,4-dihydroxymethylcyclohexane, 1,2-bishydroxyethoxycyclohexane, 1,3-bishydroxyethoxycyclohexane, 1,4-bishydroxyethoxycyclohexane, 1,2-bishydroxyethoxycarbonylcyclohexane, 1,3-bishydroxyethoxycarbonylcyclohexane, 1,4-bishydroxyethoxycarbonylcyclohexane, 2,5-dihydroxymethyl-bicyclo[2.2.1]heptane, 2,6-dihydroxymethyl-bicyclo[2.2.1]heptane, 3,8-dihydroxymethyl-tricyclo[5.2.1.0^{2,6}]decane, 3,9-dihydroxymethyl-tricyclo[5.2.1.0^{2,6}]decane, 4,8-dihydroxymethyl-tricyclo[5.2.1.0^{2,6}]decane, diethylene glycol, triethylene glycol, tetraethylene glycol, polyethylene glycol having a molecular weight of less than 400, dipropylene glycol, polypropylene glycol having a molecular weight of less than 400, dibutylene glycol, and polybutylene glycol having a molecular weight of less than 400;
divalent phenols such as catechol, resorcin, hydroquinone, bisphenol A and bisphenol F;
phenol alcohol compounds such as partial ethylene oxide adducts or partial propylene oxide adducts of these divalent phenols; and the like.

Examples of the low molecular weight triol include:
trivalent alcohols such as glycerin, trimethylolethane, trimethylolpropane, 1,2,4-butanetriol, 1,2,5-hexanetriol, 1,2,6-hexanetriol, 5-methyl-1,2,4-heptanetriol, 1,2,3-cyclohexanetriol and 1,3,5-cyclohexanetriol;
trivalent phenols such as 1,2,3-benzenetriol, 1,2,4-benzenetriol and 1,3,5-benzenetriol;
phenol alcohol compounds such as partial ethylene oxide adducts or partial propylene oxide adducts of these trivalent phenols; and the like.

Examples of the low molecular weight tetra- or higher multi-valent alcohol include pentaerythritol, dipentaerythritol, erythritol, xylitol, glucose, sucrose, fructose, sorbitol, 1,2,3,4-cyclohexanetetraol, 1,2,4,5-cyclohexanetetraol, cyclohexanepentaol, inositol, and the like.

Examples of the polyamine include:
aliphatic polyamines such as ethylenediamine, 1,4-tetramethylenediamine and polyoxypropylenetriamine;
alicyclic polyamines such as 4,4'-methylene-bis-2-methylcyclohexylamine;
aromatic polyamines such as 1,4-phenylenediamine, 2,6-diaminotoluene, 1,5-naphthalenediamine, 3,3'-dimethyl-4,4'-diaminodiphenylmethane, 1-methyl-3,5-bis(methylthio)-2,6-diaminobenzene, 1-methyl-3,5'-diethyl-2,6-diaminobenzene, 4,4'-methylene-bis-(3-chloro-2,6-diethylaniline), 4,4'-methylene-bis-(ortho-chloroaniline), 4,4'-methylene-bis-(2,3-dichloroaniline), trimethylene glycol-di-para-aminobenzoate, 4,4'-methylene-bis-(2,6-diethylaniline), 4,4'-methylene-bis-(2,6-diisopropylaniline), 4,4'-methylene-bis-(2-methyl-6-isopropylaniline), 4,4'-diaminodiphenyl sulfone, tolylenediamine, diethyltolylenediamine, 4,4'-diaminodiphenylmethane, 3,3'-dichloro-4,4'-diaminodiphenylmethane (MOCA), chloroaniline-modified dichlorodiaminodiphenylmethane, 3,5-bis(methylthio)-2,4-toluenediamine, 3,5-bis(methylthio)-2,6-toluenediamine, a methylene dianiline/ sodium chloride complex, 1,2-bis(2-aminophenylthio)ethane and trimethylene glycol-di-p-aminobenzene; and the like.

Examples of the aminoalcohol include ethanolamine, diethanolamine, N-methyldiethanolamine, triethanolamine, and the like.

The proportion of the crosslinking agent used in the composition for forming a urethane foam rubber (U), with respect to 100 parts by mass of the polyol component, is preferably no greater than 5 parts by mass, more preferably 0.01 parts by mass to 3 parts by mass, still more preferably 0.02 parts by mass to 1 part by mass, and particularly preferably 0.03 parts by mass to 0.5 parts by mass. When the proportion of the crosslinking agent used in the urethane foam rubber falls within the above range, the coefficient of impact resilience can be further increased.

### Curing Accelerator Catalyst

The composition for forming a urethane foam rubber (U) may contain a curing accelerator catalyst for accelerating curing through a urethane bond-forming reaction of the isocyanate components with the polyol components.

The curing accelerator catalyst is exemplified by a tertiary amine, a metal compound, and the like.

Examples of the tertiaryamine include TEDA (triethylenediamine, 1,4-diazabicyclo-[2.2.2]octane), N,N,N',N'-tetramethylhexamethylenediamine, N,N,N',N'-tetramethylpropylenediamine, N,N,N',N',N"-pentamethyldiethylenetriamine, trimethylaminoethylpiperazine, N,N-dimethylcyclohexylamine, N,N-dimethylbenzylamine, N-methylmorpholine, N-ethylmorpholine, triethylamine, tributylamine, bis(dimethylaminoalkyl)piperazine, N,N,N',N'-tetramethylethylenediamine, N,N-diethylbenzylamine, bis(N,N-diethylaminoethyl) adipate, N,N,N',N'-tetramethyl-1,3-butanediamine, N,N-dimethyl-β-phenylethylamine, 1,2-dimethylimidazole, 2-methylimidazole, and the like.

Examples of the metal compound include:
carboxylic acid salts of tin such as dimethyltin dilaurate, dibutyltin dilaurate, dibutyltin maleate, dibutyltin diacetate, tin octylate and tin naphthenate;
titanium acid esters such as tetrabutyl titanate and tetrapropyl titanate;
organic aluminum compounds such as aluminum tris(acetylacetonate), aluminum tris(ethyl acetoacetate) and diisopropoxyaluminum ethyl acetoacetate;
chelate compounds such as zirconium tetraacetylacetonate and titanium tetraacetylacetonate, and octanoic acid metal salts such as lead octanoate and bismuth octanoate; and the like.

Of these, the curing accelerator catalyst is preferably a tertiary amine, and more preferably triethylenediamine (TEDA) in light of acceleration of the curing reaction velocity.

In light of optimization of the curing reaction velocity, the proportion of the curing accelerator catalyst used with respect to 100 parts by mass of the polyol component is , preferably no less than 0.1 parts by mass and no greater than 1 part by mass, and more preferably no less than 0.35 parts by mass and no greater than 0.5 parts by mass.

### Foaming Agent

As the foaming agent, a conventionally used foaming agent for forming a urethane foam rubber may be used. Examples of the foaming agent include: water; halogenated hydrocarbons such as hydrochlorofluorocarbon (HCFC) and hydrofluorocarbon (HFC); hydrocarbons having a low boiling point (about -5 to 70°C) such as butane, pentane and cyclopentane, liquefied carbon dioxide, and the like. Of these, water is preferred.

In light of further optimization of the hardness and the density of the urethane foam rubber, the proportion of the foaming agent used with respect to 100 parts by mass of the polyol component is, when water is used as the foaming agent, preferably 0.1 parts by mass to 1.5 parts by mass, and more preferably 0.3 parts by mass to 1.0 part by mass.

### Foam Stabilizer

The foam stabilizer is exemplified by silicone foam stabilizers such as a dimethyl siloxane type foam stabilizer and a polyether-modified dimethyl siloxane type foam stabilizer, and the like.

The proportion of the foam stabilizer used with respect to 100 parts by mass of the polyol component is preferably 0.1 parts by mass to 9 parts by mass, and more preferably 0.5 parts by mass to 3 parts by mass.

### Antioxidant

Examples of the antioxidant include:
phenol compounds such as 2,6-di-tert-butyl-4-methylphenol, 2-tert-butyl-4-methoxyphenol, 6-tert-butyl-2,4-methylphenol and 2,6-di-tert-butylphenol;
amine compounds such as n-butyl-p-aminophenol, 4,4'-dimethyldiphenylamine, 4,4'-dioctyldiphenylamine and 4,4'-bis-α,α'-dimethylbenzyldiphenylamine; and the like.

The proportion of the antioxidant used with respect to 100 parts by mass of the polyol component is preferably 0.1 parts by mass to 1.5 parts by mass, and more preferably 0.3 parts by mass to 1.0 part by mass.

### Ultraviolet Ray-Absorbing Agent

Examples of the ultraviolet ray-absorbing agent include p-t-butylphenyl salicylate, 2-hydroxy-4-methoxybenzophenone, and the like.

The proportion of the ultraviolet ray-absorbing agent used with respect to 100 parts by mass of the polyol component is preferably 0.1 parts by mass to 1.5 parts by mass, and more preferably 0.3 parts by mass to 1.0 part by mass.

In addition to the components described above, the composition for forming a urethane foam rubber (U) may contain, for example, a plasticizer, a reinforcing agent, a colorant (dye, pigment, etc.,), a stabilizer, a light stabilizer, a bulking filler, a fire retardant, a conductive agent, a lubricant, a processing aid, and the like.

### Production Method of Urethane Foam Rubber

The urethane foam rubber may be produced, for example, using the composition for forming a urethane foam rubber (U) and the like, or by a process including: separately charging an isocyanate portion including the isocyanate components, and a polyol portion prepared by previously mixing and stirring the polyol components, the crosslinking agent, the curing accelerator catalyst, the foaming agent, the foam stabilizer and the like; mixing and stirring in a molding machine; injecting into a mold; and permitting foaming.

The lower limit of the coefficient of impact resilience at 23°C of the urethane foam rubber is preferably 0.76, more preferably 0.78, still more preferably 0.80, and particularly preferably 0.81.

The lower limit of the Asker C hardness at 23°C of the urethane foam rubber is preferably 20, more preferably 25, and still more preferably 30. The upper limit of the Asker C hardness at 23°C of the urethane foam rubber is preferably 70, more preferably 60, and still more preferably 55.

The lower limit of the Asker C hardness at -20°C of the urethane foam rubber is preferably 20, more preferably 25, and still more preferably 30. The upper limit of the Asker C hardness at -20°C is preferably 80, more preferably 70, and still more preferably 60.

The density of the urethane foam rubber is preferably no less than 0.3 g/cm³ in light of an improvement of the hardness.

The tan δ of the urethane foam rubber is preferably no greater than 0.1, in light of an improvement of the coefficient of impact resilience.

The urethane foam rubber has a great coefficient of impact resilience as well as a low hardness and a small tan δ, and is capable of stably attaining these characteristics even in a low temperature range as described above; therefore, the urethane foam rubber can be suitably used as, for example, a material for which enabling transfer of a small input energy without a loss is required. In addition, since the urethane foam rubber has a low hardness, which is approximate to the hardness of human bodies, the urethane foam rubber can be suitably used in, for example, various industrial products and industrial intended usage as materials for the interface that intervene between human bodies and various types of instruments. Examples of such intended usage may include beddings, devices for sports, shoes, musical instruments, computer input devices, and the like.

### EXAMPLES

Hereinafter, the embodiment of the present invention will be explained in more detail by way of Examples, but the present invention is not in any way limited by Examples.

### Production of Urethane Foam Rubber

Each material used in the production of the urethane foam rubbers of Examples and Comparative Examples is shown below.

### Diisocyanate (A)

A-1: carbodiimide-modified MDI ("Millionate MTL-C", Nippon Polyurethane Industry Co., Ltd.; mixture of carbodiimide-modified MDI/ MDI = 30/70 (mass ratio); NCO%: 29%)
A-2: diphenylmethane diisocyanate (MDI; NCO%: 33.1%)

### Isocyanate (B)

B-1: polymethylene polyphenylene polyisocyanate ("M20S", BASF INOAC Polyurethanes Ltd.: NCO%: 31%)

### Polyether Polyol (C)

C-1: polyoxypolytetramethylene glycol (PTMG; Mw: 2,000)
C-2: polyether diol ("FH-2202", Sanyo Chemical Industries, Ltd.; Mw: 1,800; OH value: 54)
C-3: polyoxypolypropylene glycol (PPG; Mw: 2,000)
C-4: polyoxypolytetramethylene glycol (PTMG; Mw: 1,000)
C-5: polyoxypolytetramethylene glycol (PTMG; Mw: 3,000)
C-6: diol obtained by copolymerizing tetrahydrofuran with 3-methyltetrahydrofuran ("PTG-L 2000", Hodogaya Chemical Co., Ltd.; Mw: 2,000)

### Prepolymer (D)

D-1: polyether polyol-modified MDI prepolymer ("Coronate 1095", Nippon Polyurethane Industry Co., Ltd.; reaction product of liquid diphenylmethane diisocyanate with polyether polyol; NCO%: 24%)

### Curing Accelerator Catalyst

E-1: triethylenediamine (TEDA)

### Foaming Agent

F-1: pure water

### Foam Stabilizer

G-1: silicone foam stabilizer ("SZ3601", Dow Corning Toray Co., Ltd.)

### Antioxidant

H-1: IRGANOX 1010 (BASF Japan Ltd.)

### Ultraviolet Ray-Absorbing Agent

I-1: EVERSORB 74 (Everlight Chemical Industrial Co., Taiwan)

### Example 1

As the diisocyanate (A), 100 parts by mass of (A-1) was charged into a casting machine, and separately were mixed and charged 227 parts by mass of (C-1) and 86 parts by mass of (C-4) each as the polyether polyol (C), 1.43 parts by mass of (E-1) as the crosslinking agent, 1 part by mass of (F-1) as the foaming agent, 3 parts by mass of (G-1) as the foam stabilizer, 1 part by mass of (H-1) as the antioxidant, and 1 part by mass of (I-1) as the ultraviolet ray-absorbing agent. Both of these were mixed with a mixing head of the casting machine, and cast into a mold which had been heated to 50°C beforehand (length: 10 cm, width: 10 cm, height: 1.5 cm) and cured for 30 min. Subsequently, postcuring was carried out at 80°C for 120 min. Thereafter, releasing gave a urethane foam rubber of Example 1.

### Examples 2 to 5 and Comparative Examples 1 to 4

The urethane foam rubber of each of Examples and Comparative Examples was obtained in a similar manner to Example 1 except that each material of the type and the amount shown in Table 1 below was used.

### Evaluations

With respect to the obtained urethane foam rubbers, the following evaluations were made in accordance with the methods below. The results of the evaluations are shown in Table 1 in all.

### Density

The mass of the obtained urethane foam rubber was measured, and the density (g/cm³) was determined based on its volume.

### Coefficient of Impact Resilience

In accordance with JIS-K6400 (falling-ball test), the coefficient of impact resilience of the obtained urethane foam rubber was measured.

### Asker C Hardness

In accordance with JIS-K7312, the Asker C Hardness was measured using the obtained urethane foam rubber with a type C durometer. Three test pieces were subjected to the measurement, and an average of the measurements was calculated for the determination. The Asker C hardness at each temperature of -20°C, -10°C, 0°C, 23°C and 50°C was determined.

### Tan δ

In accordance with JIS-K7198, using a test piece (cube: 15 mm x 15 mm x 15 mm) produced by cutting away from the obtained urethane foam rubber, a tan δ was measured with a dynamic viscoelasticity measuring instrument ("ARES-G2 rheometer", TA Instruments) under a condition involving: "compression-torsion" mode; a frequency of 0.5 Hz; a dynamic strain of 0.001; and a rate of temperature rise of 3°C/min. Three test pieces were subjected to the measurement, and an average of the measurements was calculated for the determination. Tan δ at each temperature of -20°C, -10°C, 0°C, 23°C and 50°C was determined.

**Table 1**

| Content in Composition (parts by mass) | type | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|
| diisocyanate (A) | A-1 | 100 | 90 | | | 100 | 100 | 100 | 100 | |
| | A-2 | | | | | | | | | 100 |
| tri- or higher multi-functional isocyanate (B) | B-1 | | 10 | | | | | | | |
| polyether polyol (C) | C-1 | 227 | 416 | 311 | 310 | | 417 | | | 239 |
| | C-2 | | | 36 | | | | | | |
| | C-3 | | | | 35 | | | | | |
| | C-4 | 86 | | | | | | | 258 | |
| | C-5 | | | | | | | 516 | | |
| | C-6 | | | | | 417 | | | | |
| prepolymer (D) | D-1 | | | 100 | 100 | | | | | |
| NCO Index | | 1.05 | 1.05 | 1.05 | 1.05 | 1.05 | 1.05 | 1.05 | 1.05 | 1.05 |
| curing accelerator catalyst (E) | E-1 | 1.43 | 0.22 | 0.67 | 0.67 | 0.71 | 0.71 | 0.88 | 0.33 | 0.33 |
| foaming agent (F) | F-1 | 1 | 2 | 2 | 2 | 2 | 2 | 3 | 1 | 1 |
| foam stabilizer (G) | G-1 | 3 | 4 | 4 | 4 | 4 | 4 | 5 | 3 | 2 |
| antioxidant | H-1 | 1 | 2 | 2 | 2 | 2 | 2 | 3 | 1 | 1 |
| ultraviolet rayabsorbing agent | I-1 | 1 | 2 | 2 | 2 | 2 | 2 | 3 | 1 | 1 |
| density (g/cm³) | | 0.44 | 0.44 | 0.44 | 0.44 | 0.44 | 0.44 | 0.44 | 0.44 | 0.44 |
| coefficient of restitution | (23°C) | 0.81 | 0.80 | 0.78 | 0.78 | 0.80 | 0.81 | 0.80 | 0.74 | 0.75 |
| Asker C hardness | (50°C) | 46 | 49 | 48 | 48 | 55 | 52 | 50 | 43 | 47 |
| | (23°C) | 44 | 43 | 45 | 44 | 54 | 50 | 47 | 39 | 45 |
| | (0°C) | 43 | 46 | 46 | 46 | 53 | 50 | 52 | 41 | 44 |
| | (-10°C) | 44 | 46 | 47 | 46 | 53 | 90 | 75 | 41 | 44 |
| | (-20°C) | 44 | 50 | 54 | 50 | 54 | 92 | 80 | 42 | 43 |
| tan δ | (50°C) | 0.03 | 0.03 | 0.02 | 0.03 | 0.03 | 0.02 | 0.03 | 0.02 | 0.04 |
| | (23°C) | 0.03 | 0.03 | 0.02 | 0.04 | 0.03 | 0.03 | 0.08 | 0.03 | 0.04 |
| | (0°C) | 0.03 | 0.04 | 0.03 | 0.05 | 0.04 | 0.05 | 0.1 | 0.04 | 0.04 |
| | (-10°C) | 0.05 | 0.04 | 0.03 | 0.05 | 0.05 | 0.2 | 0.2 | 0.1 | 0.05 |
| | (-20°C) | 0.1 | 0.1 | 0.1 | 0.1 | 0.07 | 0.2 | 0.3 | 0.3 | 0.05 |

As is revealed from the results shown in Table 1, the urethane foam rubbers of Examples had a great coefficient of impact resilience, a low hardness and a small tan δ. In addition, achieving these characteristics even in a low and wide temperature range of from -20° to 50°C was enabled. To the contrary, it is seen that the urethane foam rubbers of Comparative Examples had a low coefficient of impact resilience, or a deteriorated characteristic of a low hardness
or a small tan δ in a low temperature range.

### INDUSTRIAL APPLICABILITY

The urethane foam rubber has a great coefficient of impact resilience as well as a low hardness and a small tan δ, and is capable of attaining these characteristics even in a low temperature range. According to the composition for forming a urethane foam rubber, a urethane foam rubber having the above characteristics can be formed. Therefore, the urethane rubber can be suitably used for beddings, devices for sports, shoes, musical instruments, computer input devices, and the like.

## Claims

1. A urethane foam rubber comprising a polymer having a moiety derived from a diisocyanate, and a moiety derived from a polyether polyol,
number of atoms included in a shortest path along a bond intervening two NCO groups in at least a part of the diisocyanate being no less than 11,
a weight average molecular weight of the polyether polyol being no less than 1,000 and no greater than 4,000, and
the polymer exhibiting at least one of following features (i) to (iii) :
(i) having moieties derived from two or more types of the polyether polyols that are each different in terms of at least one of a weight average molecular weight and an oxyalkylene unit;
(ii) having the moiety derived from the polyether polyol that includes two or more types of oxyalkylene units; and
(iii) further having a moiety derived from a trior higher multi-functional isocyanate.

2. The urethane foam rubber according to claim 1, wherein the polymer exhibits the feature (i).

3. The urethane foam rubber according to claim 2, wherein the two or more types of polyether polyols are at least two selected from the group consisting of polyoxypolytetramethylene glycol, polyoxypolypropylene glycol and polyoxypolyethylene glycol-polyoxypolypropylene glycol.

4. The urethane foam rubber according to any one of claims 1 to 3, wherein the polymer exhibits the feature (ii).

5. The urethane foam rubber according to any one of claims 1 to 4, wherein the polymer exhibits the feature (iii).

6. The urethane foam rubber according to any one of claims 1 to 5, wherein a molecular weight distribution curve as determined by gel permeation chromatography of the polyether polyol includes two or more peaks.

7. The urethane foam rubber according to any one of claims 1 to 6, wherein the urethane foam rubber has a coefficient of impact resilience at 23°C of no less than 0.76.

8. The urethane foam rubber according to any one of claims 1 to 7, wherein the urethane foam rubber has an Asker C hardness at 23°C of no greater than 70.

9. A composition for forming a urethane foam rubber comprising a material comprising a diisocyanate and a polyether polyol, or a prepolymer constituted with the material,
number of atoms included in a shortest path along a bond intervening two NCO groups in at least a part of the diisocyanate being no less than 11,
a weight average molecular weight of the polyether polyol being no less than 1,000 and no greater than 4,000, and
the polymer exhibiting at least one of following features (i) to (iii) :
(i) having moieties derived from two or more types of the polyether polyols that are each different in terms of at least one of a weight average molecular weight and an oxyalkylene unit;
(ii) having the moiety derived from the polyether polyol that includes two or more types of oxyalkylene units; and
(iii) further having a moiety derived from a trior higher multi-functional isocyanate.

10. The composition for forming a urethane foam rubber according to claim 9, further comprising a foam stabilizer.
